# EUROPÄISCHE PATENTSCHRIFT

(11) **EP 0 942 517 B1**
(45) Veröffentlichungstag und Bekanntmachung des Hinweises auf die Patenterteilung: **20.08.2008**
(21) Anmeldenummer: 99890072.4
(22) Anmeldetag: 02.03.1999
(51) Int. Cl.: H02K 21/12

(54) **Transversalflussmaschine**
Transverse flux machine
Machine a flux transversal

(30) Priorität: 03.03.1998 AT 37298
(43) Veröffentlichungstag der Anmeldung: 15.09.1999
(73) Patentinhaber: Bombardier Transportation GmbH, 13627 Berlin (DE)
(72) Erfinder: Stockmayer, Michael, 2700 Katzelsdorf (AT); Neudorfer, Harald, 2514 Traiskirchen (AT)
(74) Vertreter: Sonn, Helmut

(56) Entgegenhaltungen:
- EP-A- 0 790 695
- WO-A-95/04399
- WO-A-96/19861

## Beschreibung

Die Erfindung betrifft eine Transversalflußmaschine gemäß dem Oberbegriff des Patentanspruchs 1.

Bei einer einseitigen Transversalflußmaschine sind nur auf einer Seite der Permanentmagnete U-Joche und I-Joche angeordnet. Eine solche Maschine geht beispielsweise aus der DE 197 14 895 A1 oder der WO 97/39515 A1 hervor. Bei zweiseitigen Transversalflußmaschinen sind beiderseits der Permanentmagnete U-Joche angeordnet. Die letztgenannten Maschinen haben den Nachteil, daß sie zweiphasige Netze erfordern.

Die Transversalflußmaschine besitzt ihren Namen von der Führung des magnetischen Flusses, der im Gegensatz zu herkömmlichen elektrischen Maschinen nicht longitudinal sondern transversal gerichtet ist. Transversalflußmaschinen weisen im Vergleich zu anderen Maschinenbauformen sehr hohe Kraftdichten bei vergleichbarer Baugröße auf. Beispielsweise ruft eine Transversalflußmaschine etwa in doppeltes Drehmoment hervor, wie herkömmliche Asynchronmaschinen gleicher Baugröße. Auch der Wirkungsgrad von Transversalflußmaschinen ist höher als jener bei Asynchronmaschinen. Ein weiterer Vorteil von Transversalflußmaschinen besteht darin, daß die zur Erzeugung des magnetischen Feldes notwendige Wicklung sehr einfach herzustellen ist, da diese in der Regel aus einer einfachen Ringwicklung besteht. Die Transversalflußmaschine besteht zwar aus sehr vielen Einzelteilen, diese können allerdings bei entsprechendem Konzept relativ leicht automatisiert hergestellt werden.

Die ersten Transversalflußmaschinen wiesen ein sehr schlechtes Verhältnis zwischen magnetischem Nutzfluß und Streufluß auf, sodaß eine breite praktische Anwendung scheiterte. In der DE 197 14 895 A1 wurden die Streuwege durch eine spezielle Ausgestaltung der U-förmigen und I-förmigen Joche reduziert, sodaß der Drehschub gesteigert werden konnte. Allerdings weist auch die Konstruktion gemäß diesem Dokument fertigungstechnische Nachteile auf.

Eine Aufgabe der vorliegenden Erfindung besteht darin, eine Transversalflußmaschine zu schaffen, welche fertigungstechnisch einfacher herstellbar ist und zugleich einen möglichst hohen Wirkungsgrad sowie ein möglichst hohes Drehmoment für eine wirtschaftliche Anwendbarkeit der Maschine besitzt.

Gelöst wird die erfindungsgemäße Aufgabe dadurch, daß die U-Joche geteilt sind, wobei die oder jede Teilungsebene mit der U-Joch-Ebene einen spitzen bis rechten Winkel einschließt, und daß die Einzelteile der U-Joche an ihren Berührungsflächen komplementäre formschlüssige Ausbildungen zur Verhinderung einer radialen Verschiebung der Einzelteile der U-Joche zueinander aufweisen. Durch die Trennung der U-Joche kann der Zusammenbau der Maschine wesentlich vereinfacht werden, da die vorgefertigten Ringwicklungen einfach eingelegt werden können und danach die U-Joche zusammengesetzt werden. Durch entsprechende komplementäre formschlüssige Ausbildungen der Berührungsflächen der Einzelteile ist eine radiale Verschiebung, insbesondere bei hohen Drehzahlen der Maschine nicht möglich. Da kein Werkzeug zum Zusammensetzen der Einzelteile der U-Joche verwendet werden muß, ist der Zusammenbau derselben sehr rasch durchführbar. Die Teilungsebene wird vorzugsweise unter einem rechten Winkel, also 90° zur U-Joch-Ebene stehen, es sind aber auch Winkel kleiner 90° möglich. Unter U-Joch-Ebene wird die Ebene des U-Jochs verstanden, in der die hauptsächlichen Ausdehnungen des üblicherweise relativ flach ausgebildeten U-Jochs liegen, verstanden. Die U-Joch-Ebenen sind bei der Transversalflußmaschine radial um die Rotationsachse angeordnet. Zur Reduktion der Wirbelstromverluste können die U-Joche und I-Joche aus lamellierten Blechen, welche zumindest einseitig mit Back-Lack od. dgl. beschichtet sind, aufgebaut werden. Die Beschichtung bewirkt einerseits die Isolierung der Bleche und andererseits die nötige Klebewirkung beim Zusammenpressen der die U-Joche oder I-Joche bildenden Blechpakete. Alternativ dazu können die Bleche der U-Joche und I-Joche auch identische durch Tiefziehen, Prägen. Stanzen od. dgl. hergestellte Ausformungen aufweisen, sodaß die Bleche stapelbar und zu Blechpaketen, welche die U-Joche und I-Joche bilden, zusammenpreßbar sind. Die übereinandergestapelten Ausformungen liefern nach dem Zusammenpressen der Bleche einen ausreichende Haftung der Bleche zueinander, sodaß keine weiteren Klebemittel od. dgl. verwendet werden müssen. Die Isolierung der einzelnen Bleche zueinander erfolgt meist durch eine bereits am Blech vorgesehene sehr dünne Lackisolierung.

Ein besserer Halt der Einzelteile der U-Joche wird dadurch erreicht, daß die formschlüssigen Ausbildungen der Einzelteile der U-Joche derart ausgebildet sind, daß auch eine axiale Verschiebung der Einzelteile der U-Joche zueinander verhinderbar ist. Dies kann beispielsweise durch widerhakenförmige Gestaltung des Formschlusses erzielt werden.

Vorteilhafterweise sind die I-Joche in einem magnetisch und elektrisch isolierenden Formkörper eingebettet. Dadurch wird die axiale Lage der I-Joche in Bezug auf die U-Joche festgelegt, die Isolation der U-Joche von den I-Jochen einfach erzielt und darüber hinaus der Zusammenbau der Maschine wesentlich vereinfacht und beschleunigt. Die Formkörper können beispielsweise aus vulkanisiertem Silikongummi, der eine sehr hohe Temperaturbeständigkeit aufweist, aufgebaut sein.

Um das Zusammenbauen oder Zerlegen der Transversalflußmaschine weiter zu vereinfachen, sind radiale Distanzhalter, beispielsweise Schrauben od. dgl. zur Lagefixierung des Stators gegen den Rotor vorgesehen. Dadurch wird erreicht, daß beim Zusammenbauen oder Zerlegen der Maschine die Permanentmagnete, welche eine enorme magnetische Anziehungskraft aufweisen, ein Ineinanderstecken von Stator und Rotor möglich wird und die Permanentmagnete durch einen Zusammenstoß mit den gegenüberliegenden Bauteilen der Maschine nicht beschädigt werden. Nach der Montage der Lagerschilder werden die Distanzhalter zur Fixierung des Stators gegen den Rotor entfernt. Bei einer allfälligen Zerlegung des Motors werden diese Distanzhalter wieder eingesetzt. Natürlich können anstelle von Schrauben andere Bauteile wie Bolzen od. dgl. vorgesehen werden.

Als Alternative zu den Distanzhalter können auch auf dem Rotor oder Stator Distanzleisten, parallel zur Rotationsachse der Maschine angeordnet sein, welche mit Hilfe von Schrauben od. dgl. über den Luftspalt zwischen Rotor und Stator distanzierbar, und während des Betriebs der Maschine unter Freigabe des Luftspalts mit Hilfe der Schrauben od. dgl. zurückziehbar sind. Da nach dem Aufsetzen der Lagerschilder der Maschine die Distanzleisten nicht mehr entfernt werden können, müssen diese während des Betriebs in der Maschine bleiben.

Gemäß einem weiteren Erfindungsmerkmal ist vorgesehen, daß die Rückschlußringe der Maschine an der, den Permanentmagneten gegenüberliegenden Seite zumindest eine Nut od. dgl. zur Sicherung vor Verdrehung aufweist, welche vorzugsweise quer zur Umfangsrichtung angeordnet ist. Durch entsprechende Ausgestaltung beispielsweise des Rotorgehäuses können die Rückschlußringe sicher vor Verdrehung eingesetzt werden.

Vorteilhafterweise weisen die Rückschlußringen zumindest m Nuten od. dgl. mit einem Abstand von (2τₚ)/m voneinander in Umfangrichtung aufeinanderfolgend auf, wobei m die Anzahl der Phasen und τₚ die Polteilung der Maschine bedeuten. Die m Nuten od. dgl. werden vorteilhafterweise in gleichen Winkelabständen voneinander öfters am Umfang der Rückschlußringe verteilt. Durch diese Konstruktion braucht nur eine Art von Rückschlußring enthalten sein und beim Zusammenstellen der Maschine jeweils ein Rückschlußringpaar gegenüber dem nächsten um (2τₚ)/m versetzt werden. Durch diese Anordnung kann die Fertigung der Nuten in den Rückschlußringen so erfolgen, daß alle Rückschlußringe übereinandergelegt werden und in einem Arbeitsgang die Nuten beispielsweise gefräst werden.

Gemäß einem weiteren Erfindungsmerkmal sind die Rückschlußringe durch axial außenliegende Preßringe in axialer Richtung fixierbar. Dadurch werden die Wirbelstromverluste gering gehalten. Das, die Rückschlußringe isolierende nichtmagnetische Material, vorzugsweise ein Hartgewebematerial, liegt dabei vorteilhafterweise auch in Form von Distanzierringen vor. Eine allfällige radiale Fixierung durch Schrauben od. dgl. kann auch vorgesehen sein.

Zur Erhöhung der Wärmeleitfähigkeit und zur Reduktion von Vibrationen sind allfällige Hohlräume zwischen den U-Jochen, den I-Jochen, den allfälligen Formkörpern und den Ringwicklungen mit elektrisch isolierendem Material ausgefüllt. Das Material soll thermisch möglichst beständig sein, eine gute Wärmeleitfähigkeit, eine schlechte elektrische Leitfähigkeit und eine Permeabilität möglichst wie Luft aufweisen. Beispielsweise kann ein in Harz getränktes Glasfaserband, ein Vlies oder Silikongummi verwendet werden. Durch das Ausfüllen der Hohlräume weisen diese eine bessere Wärmeleitfähigkeit auf, als es der Fall bei Luft wäre. Beim Betrieb der Maschine werden auch Vibrationen und Lärmentwicklung vermieden.

Ein weiterer Herstellungsvorteil ist damit verbunden, daß zur Aufnahme der U-Joche am Stator eine aus einzelnen Platten aufgebaute U-Trägernabe vorgesehen ist. welche Platten in Richtung zur Rotationsachse senkrecht orientierten Ebenen ausgerichtet sind. Die einzelnen Platten werden beispielsweise durch einen Laser geschnitten danach zusammengesetzt und verschweißt. Diese Herstellungsmethode ist gegenüber einem Fräsen der gesamten U-Trägernabe aus einem Stück wesentlich einfacher und somit kostengünstiger. Darüber hinaus können bei der Herstellung mittels Lasers in einfacher Weise allfällige Löcher zur Bildung beispielsweise von Kühlkanälen vorgesehen werden.

Gemäß einem weiteren Merkmal der Erfindung sind an den Rückschlußringen Ausformungen, beispielsweise Leisten od. dgl. entsprechend der Position der Permanentmagnete vorgesehen. Durch diese Leisten od. dgl. kann die Positionierung der Permanentmagnete beim Verkleben mit den Rückschlußringen leichter erfolgen.

Weisen die Leisten od. dgl. an den Rückschlußringen und die Permanentmagnete komplementäre Gestalt auf, kann sogar eine Fixierung der Permanentmagnete an den Rückschlußringen ohne Hilfsmittel, wie zum Beispiel einen Kleber, erfolgen. Dadurch wird der Zusammenbau der Maschine und deren Wartung weiter erleichtert. Erreicht wird dies beispielsweise durch eine trapezförmige Ausbildung der Leisten und eine konische Gestaltung der Permanentmagnete. Durch konische Ausbildung der Permanentmagnete und Fixierung durch eine Art Schlußstein ähnlich bei einem Gewölbe, kann auch eine Fixierung ohne Hilfsmittel erzielt werden. Vorteilhafterweise haben die Permanentmagnete an der dem Luftspalt zugewandten Seite eine gewölbte Form. Dadurch wird ein konstanter Luftspalt und somit ein geringerer Streufluß erzielt. Dem steht allerdings eine aufwendigere Herstellung der Magnete gegenüber. Je nach Anwendungsfall können natürlich auch quaderförmige Permanentmagnete verwendet werden, welche wesentlich einfacher herzustellen sind, allerdings einen nicht konstanten Luftspalt mit sich bringen und somit einen höheren Streufluß aufweisen.

Gemäß einem weiteren Erfindungsmerkmal ist bei der Ausbildung der Transversalflußmaschine als Außenläufer an einer feststehenden Statorachse eine U-Trägernabe zur Aufnahme der U-Joche angeordnet und der Rotor durch ein Gehäuserohr gebildet, in dem die Rückschlußringe mit den Permanentmagneten angeordnet sind. Außenläufer sind besonders für die Anwendung als Radnabenantrieb eines Fahrzeuges, insbesondere eines Niederflurfahrzeuges geeignet, da hier wenig Platz für den Antrieb zur Verfügung steht und gleichzeitig ein möglichst hohes Drehmoment auf die Fahrzeugräder übertragen werden soll. Bei einer als Außenläufer ausgebildeten Transversalflußmaschine liegt der drehmomentbildende Luftspalt radial weiter außen als bei einer als Innenläufer ausgebildeten Transversalflußmaschine gleicher Außenabmessungen. Daraus resultiert ein höheres Drehmoment bzw. eine höhere Leistung. Als Fahrzeugantrieb werden Außenläufer dann bevorzugt, wenn das Fahrzeug mit relativ großen unabgefederten Massen fahren.

Gemäß einem weiteren Erfindungsmerkmal weisen die U-Joche, die I-Joche und allenfalls die, die I-Joche enthaltenden Formkörper Nuten od. dgl. zur Aufnahme von Bandagen gegen eine radiale Verschiebung auf. Als Bandagen werden Glasgewebebänder, Kohlefaserbänder od. dgl. verwendet, welche elektrisch nichtleitend und besonders reißfest sind.

Gemäß einer vorzugsweisen Ausbildung weisen die Formkörper Doppelnuten mit zwei unterschiedlichen, abgestuften Nuttiefen auf. Dadurch können bei entsprechender Gestaltung der Nuten an den U-Jochen diese getrennt von den I-Jochen bandagiert werden, was zu einem besseren Halt und zu einer sichereren Verbindung führt.

Vorteilhafterweise ist an der Oberfläche der Statorachse mindestens ein mäanderförmiger, schraubenförmiger od. dgl. angeordneter Kühlkanal zur Führung eines vorzugsweise flüssigen Kühlmediums angeordnet, und durch ein zylinderförmiges Kühlmantelrohr nach außen abgedichtet. Für die Erzielung eines hohen Drehmoments ist eine wirksame Kühlung der Maschine essentiell. Bevorzugterweise wird der feststehende Teil der Maschine, in diesem Fall die Statorachse gekühlt, da der Kühlkanal dann einfach ohne aufwendige Gleitdichtungen od. dgl. an den Kühlkreislauf angeschlossen werden kann.

Bei der Ausbildung der Transversalflußmaschine als Innenläufer ist gemäß einem weiteren Merkmal der Erfindung um eine Rotorachse mit den Rückschlußringen mit den Permanentmagneten ein, den Stator bildenes Gehäuserohr vorgesehen, an dem innenseitig die U-Joche und I-Joche angeordnet sind. Überall dort, wo das Drehmoment einer rotierenden Welle besser verarbeitbar ist. wird die Transversalflußmaschine bevorzugterweise als Innenläufer ausgebildet. Innenläufer werden als Fahrzeugantrieb dort bevorzugt eingesetzt, wo die unabgefederten Massen möglichst gering sein sollen. Beispiele dafür sind Schienenfahrzeuge für höhere Geschwindigkeiten.

Zur Verhinderung einer radialen Verschiebung weisen bei einem Innenläufer gemäß einem weiteren Merkmal der Erfindung die Permanentmagnete oder die Rückschlußringe Nuten od. dgl. zur Aufnahme von Bandagen gegen eine radiale Verschiebung auf. Wie bereits oben beim Außenläufer erwähnt, werden als Bandagen Glasgewebebänder, Kohlefaserbänder od. dgl. verwendet, welche elektrisch nichtleitend und besonders reißfest sind.

Zur Kühlung eines Innenläufers ist vorteilhafterweise an der Oberfläche des Gehäuserohrs mindestens ein mäanderförmig, schraubenförmig od. dgl. angeordneter Kühlkanal zur Führung eines vorzugsweise flüssigen Kühlmediums angeordnet und durch ein zylinderförmiges Kühlmantelrohr nach außen abgedichtet. In diesem Fall wird das feststehende Gehäuserohr gekühlt.

Zum Antrieb der Achse eines Fahrzeuges mit der als Innenläufer ausgebildeten Transversalflußmaschine ist vorgesehen, daß die, die Permanentmagnete tragenden Rückschlußringe mit der anzutreibenden Radachse des Fahrzeuges drehfest über elastische Elemente od. dgl. verbunden sind, und daß das Gehäuserohr über Lager auf der Radachse gelagert ist und das Gehäuserohr über eine Drehmomentenstütze mit dem Fahrzeugaufbau verbunden ist. Durch die elastischen Elemente, welche einstückig oder mehrteilig sein können, werden die unabgefederten Massen reduziert, was insbesondere bei sehr hohen Geschwindigkeiten eine wesentliche Bedeutung besitzt.

Bei der obigen Aufhängung der als Innenläufer ausgebildeten Transversalflußmaschine ist vorteilhafterweise die Drehmomentenstütze durch mindestens zwei, vorzugsweise vier gelenkig miteinander verbundene, in Form eines Parallelogramms angeordnete Lenker gebildet, wobei ein Eckpunkt mit dem Gehäuserohr der Transversalflußmaschine und ein Eckpunkt mit dem Fahrzeugaufbau verbunden ist. Diese einfache Konstruktion der Drehmomentenstütze nimmt das Gegendrehmoment der Transversalflußmaschine auf, während Relativbewegungen des Antriebs zum Fahrzeugaufbau in Fahrtrichtung des Fahrzeuges sowie in senkrechter Richtung zugelassen werden.

Weitere Erfindungsmerkmale werden anhand der beigefügten Abbildungen näher erläutert.

Darin zeigen:
- Fig. 1: eine Prinzipskizze eines Teils einer Transversalflußmaschine zur Erläuterung des magnetischen Flußverlaufs,
- Fig. 2: eine perspektivische Ansicht des Stators einer Ausführungsform der erfindungsgemäßen Transversalflußmaschine in Konstruktion eines Außenläufers,
- Fig. 3: eine perspektivische Ansicht des zum Stator gemäß Fig. 2 gehörigen Rotors einer Transversalflußmaschine,
- Fig. 4: eine perspektivische Ansicht des Stators gemäß Fig. 2 ohne Achse und mit Darstellung nur einer Ringspule ohne Preßringe.
- Fig. 5: die Anwendung einer Transversalflußmaschine in Form eines Außenläufers als Radnabenmotor eines Schienenfahrzeuges in seitlicher Schnittbilddarstellung,
- Fig. 6: eine bevorzugte Ausführungsform eines U-Jochs für eine dreiphasige Transversalflußmaschine gemäß den Figuren 2 bis 5,
- Fig.6a: das Detail VI des Formschlusses der Einzelteile eines U-Jochs aus Fig. 6 in vergrößerter Darstellung,
- Fig. 6b: eine Variante des Formschlusses der U-Joch-Einzelteile in vergrößerter Darstellung,
- Fig. 7: eine bevorzugte Ausfürungsform der erfindungsgemäß in einen Formkörper eingebetteten I-Joche in Schnittbilddarstellung,
- Fig. 8: eine Schnitt durch den Formkörper gemäß Fig. 7 entlang der Schnittlinie VIII-VIII,
- Fig. 9: eine Darstellung eines Rückschlußrings mit Nuten zur Sicherung vor Verdrehung.
- Fig. 10: die Anordnung einer Distanzleiste am Rotor zur Distanzierung des Rotors vom Stator während des Zusammenbaus der Maschine,
- Fig. 11: eine bevorzugte Ausführungsform des Rückschlußringes zur Aufnahme der Permanentmagnete,
- Fig. 12: die Anwendung einer dreiphasigen Transversalflußmaschine in Form eines Innenläufers in seitlicher Schnittbilddarstellung, und
- Fig. 13: die Anwendung einer als Innenläufer dargestellten Transversalflußmaschine für den Antrieb der Radachse eines Schienenfahrzeuges.

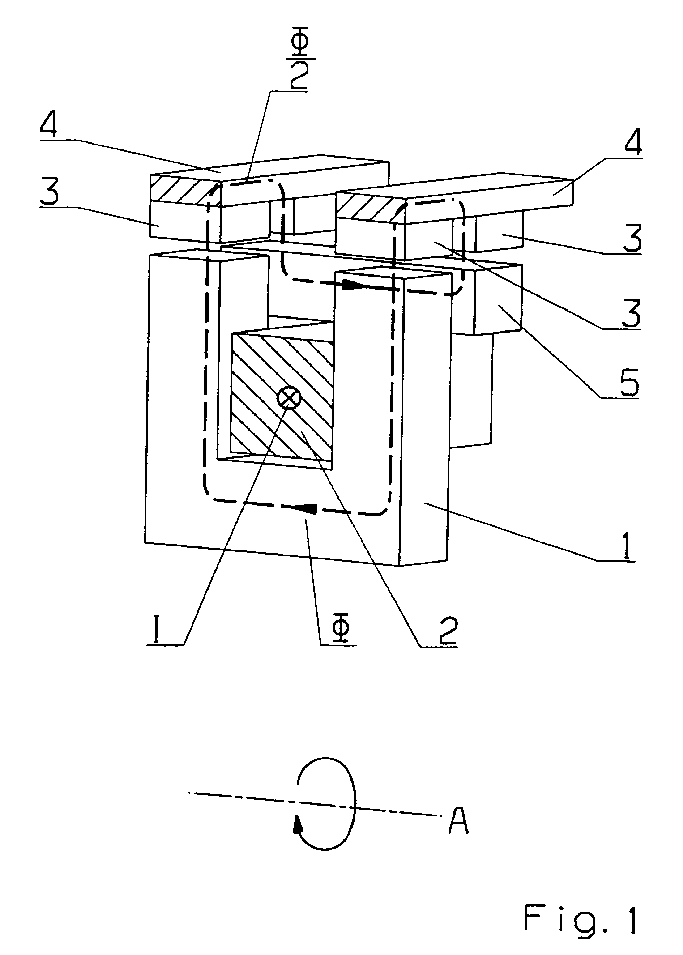

Fig. 1 zeigt einen Ausschnitt aus einer einphasigen Transversalflußmaschine in Form eines Außenläufers (d.h. der rotierende Teil der Maschine liegt außen). Innerhalb eines sogenannten U-Jochs 1 ist eine Ringwicklung 2 um die Rotationsachse A angeordnet. Über den Schenkeln des U-Jochs 1 befinden sich zwei Permanentmagnete 3, welche über Rückschlußringe 4 mit den nachfolgenden Permanentmagneten 3 magnetisch kurzgeschlossen sind. Ein in der Ringwicklung 2 fließender Wechselstrom I ruft einen magnetischen Fluß Φ hervor, der vom U-Joch 1 über den Luftspalt zu den Permanentmagneten 3 über die Rückschlußringe 4 verlaufen und über ein sogenanntes I-Joch 5 kurzgeschlossen wird. Der magnetische Fluß Φ teilt sich in zwei Hälften Φ/2 wobei die eine Hälfte über das nächste I-Joch 5 und die andere Hälfte über das vorige I-Joch 5 kurzgeschlossen wird. Eine Transversalflußmaschine setzt sich aus einer Vielzahl von solchen U-Jochen 1 I-Jochen 5 zusammen, die abwechselnd um eine Rotationsachse A angeordnet werden. Im dargestellten Beispiel würden die Permanentmagnete 3 und die Rückschlußringe 4 in einem gemeinsamen Gehäuse (nicht dargestellt) angeordnet, welches den Rotor der Maschine bildet. Die U-Joche 1 und I-Joche 5 sind üblicherweise aus weichmagnetischem Material hergestellt. Zur Reduktion der Wirbelstromverluste sind die U-Joche 1 und die I-Joche 5 vorzugsweise aus lamellierten Blechen zusammengesetzt und mit Back-Lack in an sich bekannter Weise voneinander isoliert und miteinander verklebt. Gemäß einer erfindungsgemäßen Variante können die einzelnen Lamellen der U-Joche 1 und I-Joche 5 mit Ausformungen durch Tiefziehen, Prägen, Stanzen od. dgl. versehen werden. Anschließend werden die mit diesen Ausformungen versehenen Bleche, welche meist schon vor der Bearbeitung mit einer Lackisolierung vorliegen, übereinandergelegt und miteinander verpreßt. Durch diese Konstruktionsvariante ist eine feste Verbindung der Lamellen ohne Verwendung von Back-Lack oder dergleichen möglich. Entsprechend der Polpaarzahl p sind 2p Permanentmagnete 3 über den Umfang der Maschine verteilt. Der magnetische Fluß Φ ruft in Abhängigkeit der Polpaarzahl p einen Drehschub hervor und bringt die Transversalflußmaschine zum Drehen. Bei einer einphasigen Maschine, wie in Fig. 1 dargestellt, müßte diese "angeworfen" werden, da das notwendige Anfahrmoment nicht aufgebracht werden kann. Entsprechend des dreidimensionalen Verlaufs des magnetischen Flusses Φ werden derartige Maschinen Transversalflußmaschinen genannt, da der Fluß Φ auch quer zur Motorachse verläuft. Bei herkömmlichen Asynchronmaschinen hingegen verläuft der Fluß Φ nur in Längsrichtung. Gegenüber bekannten Asynchron- oder auch Synchronmaschinen ist eine Transversalflußmaschine bei gleichem Drehmoment wesentlich leichter, respektive kann eine Transversalflußmaschine bei gleicher Maschinengröße ein etwa doppelt so großes Drehmoment hervorrufen. Der Wirkungsgrad ist höher als bei Asynchronmaschinen mit vergleichbarem Drehmoment. Gegenüber Synchron- und Asynchronmaschinen ist der Aufbau, insbesondere der Aufbau der Ringwicklung 2 bei der Transversalflußmaschine wesentlich einfacher. In der Regel ist die Ringwicklung 2 aus wenigen voneinander isolierten Flachkupferwindungen aufgebaut. Die Transversalflußmaschine besteht zwar aus relativ vielen Einzelteilen, diese sind aber aufgrund der Gleichartigkeit bzw. Ähnlichkeit relativ einfach automatisiert herstellbar. Aufgrund der relativ hohen Streuverluste haben Transversalflußmaschinen bis heute noch keine breite Anwendung gefunden. Das Drehmoment einer Transversalflußmaschine steigt proportional mit der Polpaarzahl p, welche über die Anzahl der Permanentmagnete 3 festgelegt wird. Allerdings müssen die U-Joche 1 und die I-Joche 5 mit steigender Anzahl von Permanentmagneten 3 kleiner ausgeführt werden, was in größeren magnetischen Streuflüssen resultiert. Es muß daher ein Kompromiß zwischen hohem Drehmoment und möglichst geringer Streuung eingegangen werden, sodaß eine Maschine mit möglichst hoher Schubkraft und hohem Wirkungsgrad resultiert. Üblicherweise werden je nach zur Verfügung stehendem Versorgungsnetz mehrphasige Transversalflußmaschinen mit mehreren, nebeneinander angeordneten Ringwicklungen 2 ausgeführt. Im Gegensatz zu Asynchronmaschinen erzeugt eine Transversalflußmaschine kein Drehfeld und benötigt daher für ein automatisches Anfahren zumindest zwei Phasen. In der Regel werden zweiphasige oder dreiphasige Maschinen bzw. ganzzahlige Vielfache davon eingesetzt.

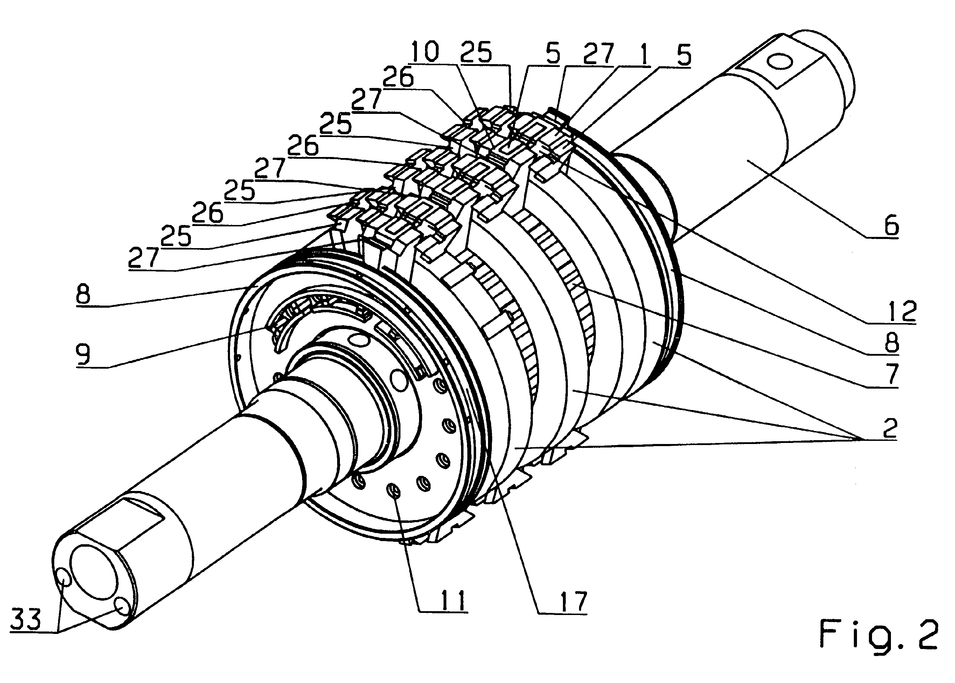

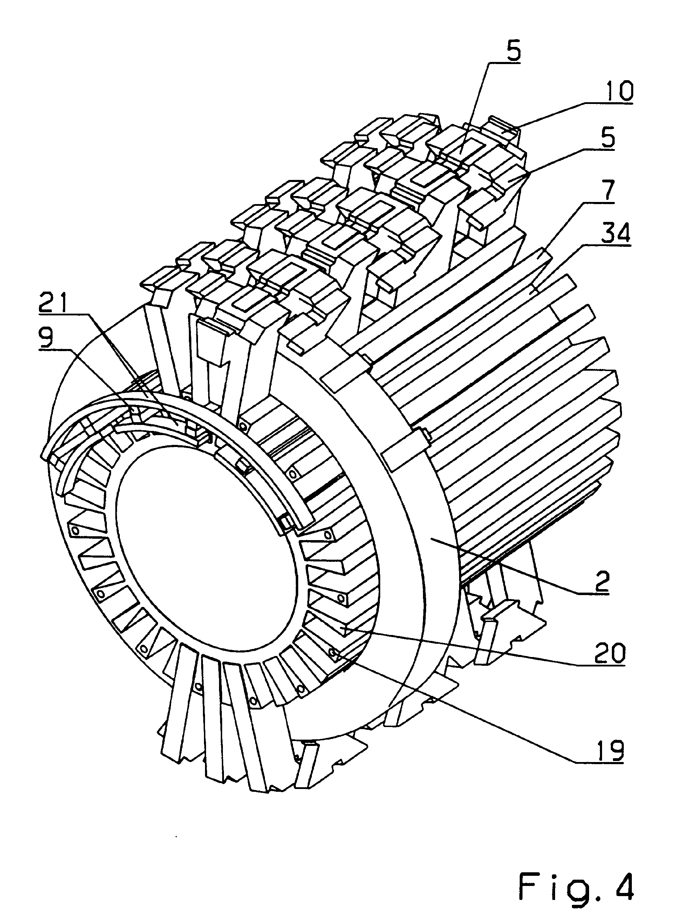

Fig. 2 zeigt eine perspektivische Ansicht eines teilweise zusammengesetzten Stators einer als Außenläufer ausgebildeten Transversalflußmaschine. Dabei ist auf einer feststehenden Statorachse 6 eine U-Trägernabe 7 aufgebracht, welche vorzugsweise aus lasergeschnittenen Blechen aufgebaut ist. Auf der U-Trägernabe 7 werden die U-Joche 1 sowie die Ringwicklungen 2 und danach die I-Joche 5 zwischen den U-Jochen 1 eingesetzt. Die Einheit ist durch Preßringe 8 axial miteinander verspannt. Die Preßringe 8 weisen entsprechende Bohrungen 11 für Schrauben auf, welche in entsprechende Gewindebohrungen in der U-Trägernabe 7 (siehe Fig. 4) eingeschraubt werden. Weiters sind an den Preßringen 8 die Anschlüsse 9 der Ringwicklungen 2 herausgeführt. Am Umfang der Preßringe 8 ist eine Nut 17 angeordnet, in welche Distanzhalter eingesetzt werden können, um beim Zusammenbau oder beim Zerlegen der Maschine eine Berührung zwischen Stator und Rotor zu verhindern. Durch die enorm hohe Anziehungskraft der Permanentmagnete 3 würde ein Ineinanderschieben des Rotors und Stators unmöglich werden. Darüber hinaus wäre damit eine Zerstörung der Permanentmagnete 3 verbunden. Gemäß einem Erfindungsmerkmal ist vorgesehen, daß die I-Joche 5 in einem Formkörper 10 angeordnet sind, der beispielsweise für gute Temperaturbeständigkeit aus vulkanisiertem Silikongummi bestehen kann. Dadurch haben die I-Joche 5 eine definierte Lage und sind von den U-Jochen 1 elektrisch und magnetisch isoliert. Zur radialen Fixierung der gesamten Anordnung werden die U-Joche 1 und I-Joche 5 am Umfang bandagiert, wofür entsprechende Nuten 25, 26, 27 in den U-Jochen 1 und den I-Jochen 5 bzw. den Formkörpern 10 vorgesehen sind. Diese Details werden weiter unten näher erläutert. Im Fall eines Innenläufers müssen die Permanentmagnete 3 oder die Rückschlußringe 4 bandagiert werden. Die Hohlräume 12, welche zwischen U-Jochen 1, I-Jochen 5 und Ringwicklungen 2 entstehen, verhindern eine gute Abführung der Wärme, da Luft eine relativ schlechte Wärmeleitfähigkeit besitzt. Darüber hinaus können die Hohlräume 12 zu Vibrationen der Maschinen, insbesondere bei hohen Drehzahlen führen. Dementsprechend werden die Hohlräume 12 gemäß einem Erfindungsmerkmal mit elektrisch isolierendem Material ausgefüllt. Das verwendete Material soll thermisch möglichst beständig sein, eine gute Wärmeleitfähigkeit, eine schlechte elektrische Leitfähigkeit und eine Permeabilität möglichst wie Luft aufweisen. Beispielsweise kann ein in Harz getränktes Glasfaserband oder Silikongummi verwendet werden. Um einen leichteren Aufbau der Maschine zu gewährleisten, sind die U-Joche 1 erfindungsgemäß mehrteilig aufgebaut, sodaß die vorgefertigten Ringwicklungen 2 leicht eingelegt werden können. Auf diese erfindungsgemäße Teilung der U-Joche 1 wird weiter unten noch näher eingegangen. Am Ende der Statorachse 6 sind zwei Öffnungen 33 für die Zu- und Ableitung des Kühlmittels zur Kühlung der Statorachse 6 ersichtlich.

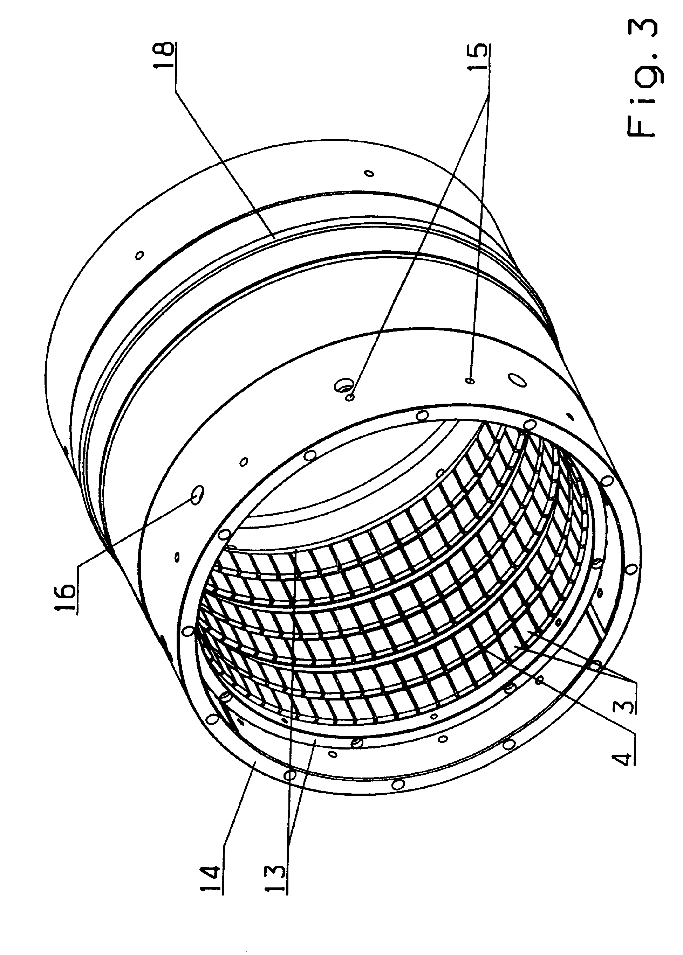

Fig. 3 zeigt eine perspektivische Ansicht des zum Stator gemäß Fig. 2 passenden Rotors der Transversalflußmaschine. Der Rotor besteht aus den am Umfang angeordneten Permanentmagneten 3, die an den Rückschlußringen 4 angeordnet und mit diesen verklebt oder andersartig fest verbunden sind. Die einzelnen Rückschlußringe 4 mit den Permanentmagneten 3 werden mit Hilfe von Fixierringen 13 axial zusammengepreßt. Zur Vereinfachung kann anstelle eines Fixierringes 13 auch eine entsprechende Ausgestaltung im Gehäuserohr 14 in Form einer Gehäuseschulter vorgesehen sein. Zwischen den einzelnen Rückschlußringen 4 werden Ringe zur Isolation eingesetzt. Dazu wird beispielsweise Hartgewebematerial verwendet, da dieses nichtmagnetisch und kaum elektrisch leitfähig ist. Schließlich wird ein Gehäuserohr 14 um den Rotor angeordnet. Die Fixierringe 13 werden beispielsweise mit Schrauben, welche durch die Bohrungen 15 am Gehäuserohr 14 gedreht werden, radial gesichert. Durch die Bohrungen 16 im Gehäuserohr 14 können Distanzhalter (nicht dargestellt), beispielsweise Distanzschrauben, eingebracht werden, welche in eine entsprechende Nut 17 am Preßring 8 des Stators der Maschine (siehe Fig. 2) eingreifen, und ein Anschlagen des Stators an die Permanentmagnete 3 beim Zusammenbauen oder Zerlegen der Maschine verhindern. Allfällige Ausformungen 18 am Gehäuserohr 14 können beispielsweise zur Montage eines Laufkranzes bei einem Radnabenantrieb für ein Schienenfahrzeug dienen (nicht dargestellt).

In Fig. 4 ist ein Teil des Stators ohne Statorachse 6 und ohne Preßringe 8 in nur teilweise zusammengebauter Form dargestellt. In diesem Fall sind erst eine Ringwicklung 2 und einige U-Joche 1 und I-Joche 5 auf der U-Trägernabe 7 angeordnet. Aus dieser Darstellung wird deutlich, daß eine Herstellung der U-Trägernabe 7 aus einem massiven Bauteil relativ aufwendig wäre, da die Nuten 34, in welche die U-Joche 1 eingesetzt werden, gefräst werden müssen sowie allfällige Gewindebohrungen 19 zur Aufnahme von Schrauben zur Fixierung der Preßringe 8 hergestellt werden müssen. Es können einzelne Zähne 20 der U-Trägernabe 7 kürzer ausgeführt sein als die übrigen Zähne 20 um das Herausführen der Anschlüsse 9 der Ringwicklungen 2 an die Stirnseite des Stators zu ermöglichen. Durch Verbinderringe 21 werden die Anschlüsse 9 der Ringwicklungen 2 von mehrphasigen Maschinen zusammengefaßt.

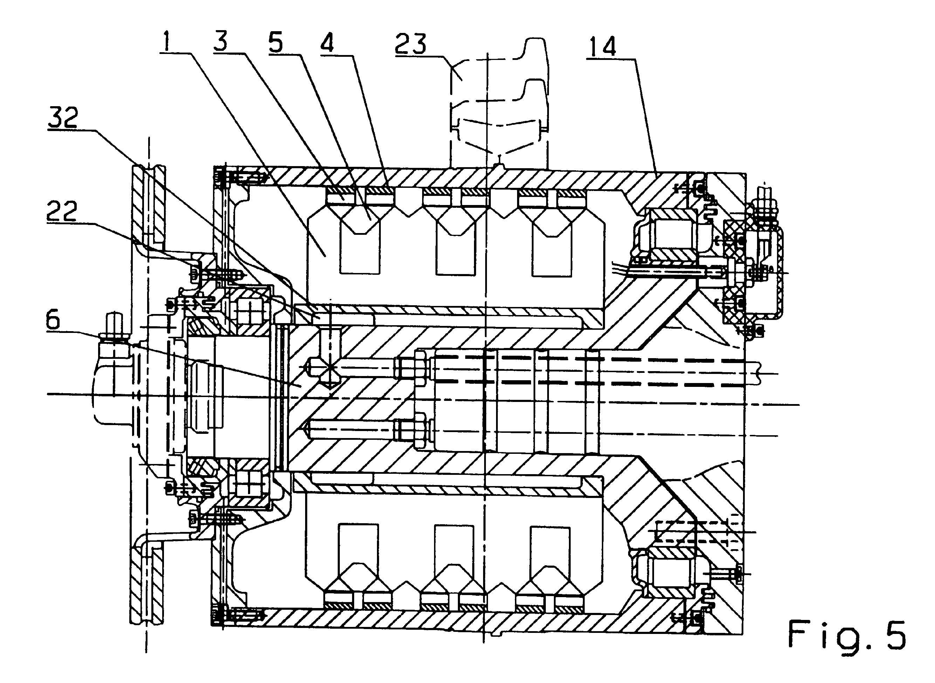

Fig. 5 zeigt eine Transversalflußmaschine als Radnabenantrieb für ein Schienenfahrzeug in seitlicher Schnittbilddarstellung. Die U-Joche 1 sind um die Statorachse 6 angeordnet. An der Oberfläche der Statorachse 6 ist ein mäanderförmiger oder doppelspiralförmiger Kühlkanal 22 angeordnet, der von einem Kühlmantelrohr 32 umschlossen wird. Auf dem Gehäuserohr 14 sind die Rückschlußringe 4 mit den Permanentmagneten 3 fest angeordnet. Auf dem Gehäuserohr 14 kann beispielsweise der Laufkranz 23 eines Schienenfahrzeuges oder die Felge mit dem Reifen eines nicht schienengebundenen Fahrzeuges befestigt werden. Die einseitige Aufhängung des Radnabenantriebs über ein Tragschild erleichtert die Montage bzw. Demontage des Antriebs.

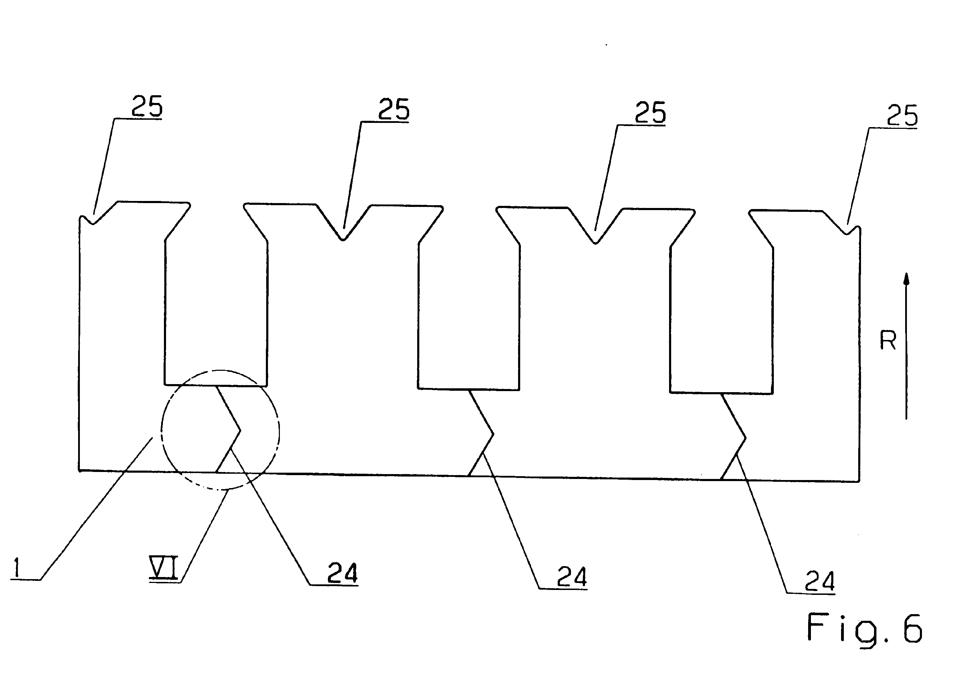

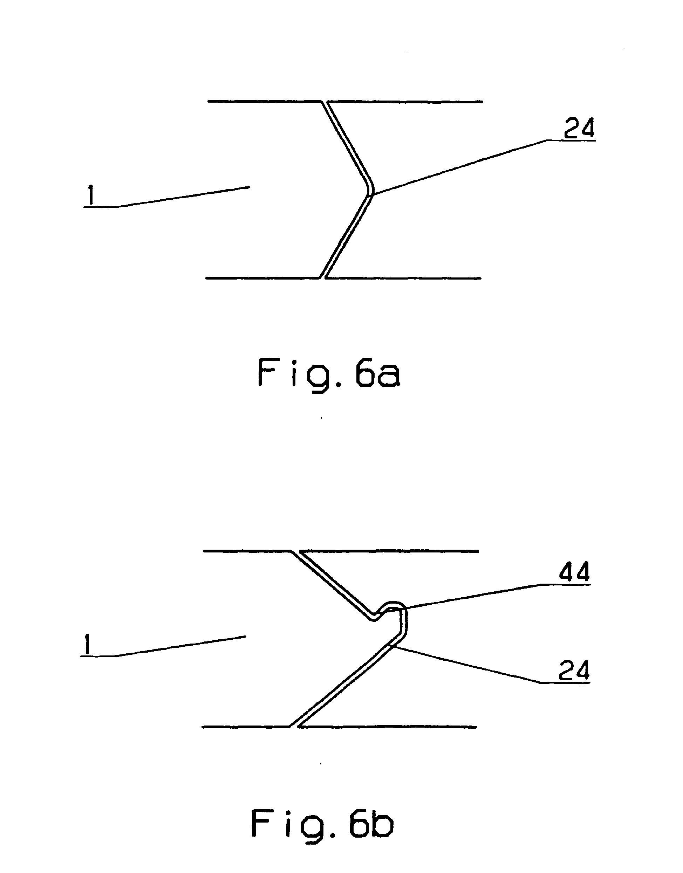

Fig. 6 zeigt eine bevorzugte Ausführungsform eines U-Jochs 1 für eine dreiphasige Maschine. Das U-Joch 1 ist dabei aus vier Einzelteilen aufgebaut, wobei jede Teilungsebene einen rechten Winkel mit der U-Joch-Ebene einschließt. Unter der U-Joch-Ebene ist jene Ebene zu verstehen, in der die Hauptausdehnungen des U-Jochs 1 liegt, also im Fall der Fig. 6 die Zeichnungsebene. Die Teilungsebene könnte aber auch einen Winkel kleiner als 90° mit der U-Joch-Ebene einschließen. Die Einzelteile des U-Jochs 1 werden jeweils durch eine formschlüssige Ausbildung 24 miteinander verbunden, sodaß eine radiale Verschiebung in Richtung des Pfeiles R nicht möglich ist. Die entsprechende Gestaltung der offenen Enden der U-Jochabschnitte dient zur Verringerung des Streuflusses. Die Nuten 25 im U-Joch 1 werden zur Bandagierung der Maschine verwendet. Fig. 6a zeigt die formschlüssige Verbindung der Einzelteile des U-Jochs 1 gemäß dem Detail VI aus Fig. 6 in vergrößerter Darstellung. Durch diese dreieckförmige komplementäre Ausbildung 24 der Einzelteile des U-Jochs 1, welche ineinandergreifen, wird eine Verschiebung der Einzelteile zueinander in radialer Richtung verhindert. Fig. 6b zeigt eine gegenüber Fig. 6a erweiterte Konstruktion eines Formschlusses, bei dem durch einen zusätzlichen Widerhaken 44 in der formschlüssigen Ausbildung 24 der Einzelteile des U-Jochs 1 auch eine Verschiebung in axialer Richtung verhindert wird, wodurch der Zusammenbau der Maschine erleichtert wird. Die formschlüssigen Verbindung zwischen den Einzelteilen des U-Jochs 1 kann beliebig gestaltet werden.

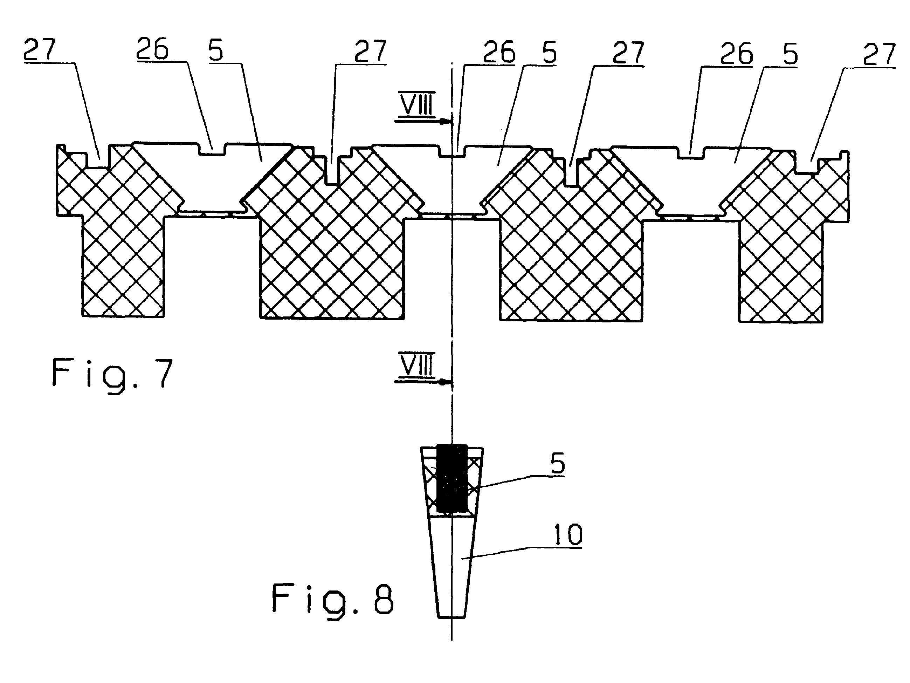

Fig. 7 zeigt einen Längsschnitt durch einen die drei I-Joche 5 einer dreiphasigen Maschine enthaltenden Formkörper 10, der vorzugsweise aus vulkanisiertem Silikongummi hergestellt ist. Fig. 8 zeigt einen Schnitt durch den Formkörper 10 entlang der Schnittlinie VIII-VIII aus Fig. 7. Durch die konische Gestalt des Formkörpers 10 wird beim Einstecken der Formkörper 10 zwischen die U-Joche 1 eine Art Gewölbedruck erreicht. Die I-Joche 5 sind, wie bereits erwähnt, vorzugsweise aus lamellierten Blechen aufgebaut. Durch das Einbetten beispielsweise das Einvulkanisieren der I-Joche 5 im Formkörper 10 ist deren Lage in Bezug auf die U-Joche 1 gesichert und sind diese gegenüber den U-Jochen 1 magnetisch und elektrisch isoliert. Wie aus Fig. 7 ersichtlich, enthalten die im Formkörper 10 eingebetteten I-Joche 5 drei Nuten 26 sowie der Formkörper 10 vier weitere Doppelnuten 27. Über die Nuten 26 werden die I-Joche 5 bandagiert. Die Doppelnuten 27 dienen zur gestuften Bandagierung vorerst der U-Joche 1, da die tieferen Abschnitte der Doppelnuten 27 mit den Nuten 25 der U-Joche 1 übereinstimmen. Mit einem breiten beispielsweise Gewebeband über die weniger tiefen Nuten der Doppelnuten 27 werden die Formkörper 10 bandagiert, sodaß keine radiale Verschiebung und somit Vibrationen während des Laufes der Maschine, insbesondere bei hohen Drehzahlen auftreten können.

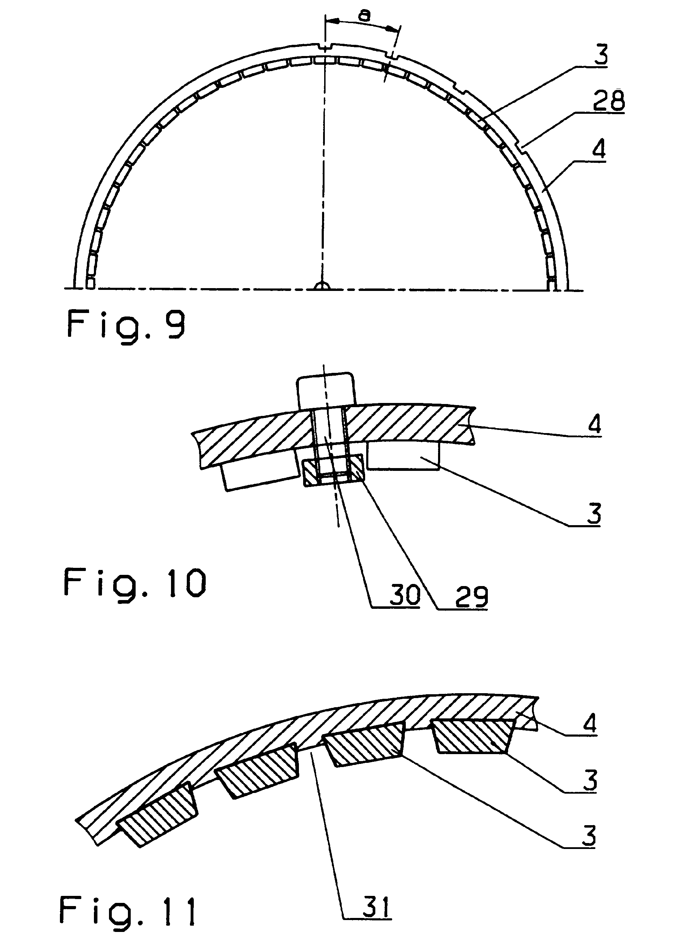

Fig. 9 zeigt einen Rückschlußring 4 einer dreiphasigen Maschine, der mit mehreren in Umfangsrichtung aufeinanderfolgenden quer zur Umfangsrichtung angeordneten Nuten 28 zur drehfesten, genau definierten Anordnung beispielsweise am Gehäuserohr 14 dienen. Je ein Paar Rückschlußringe 4 muß gegenüber dem nächsten Paar von Rückschlußringen um (2τₚ)/m versetzt werden, wobei τₚ die Polteilung und m die Anzahl der Phasen bedeuten. Im gezeigten Beispiel werden der Einfachheit halber alle Rückschlußringe 4 mit mindestens m Nuten 28 mit einem Abstand a=(2τₚ)/m voneinander ausgeführt. Für eine symmetrische Anordnung können die m Nuten 28 auch mehrfach, in gleichen Winkelabständen voneinander am Umfang der Rückschlußringe 4 angeordnet werden. Die Herstellung der Rückschlußringe 4 kann daher relativ einfach erfolgen, da diese gemeinsam mit gleicher Anzahl und Anordnung der Nuten 28 hergestellt werden und beim Zusammenbau der Maschine paarweise versetzt werden.

Fig. 10 zeigt die Anordnung einer Distanzleiste 29 am Rotor der Maschine, beispielsweise über eine Schraube 30 am Rückschlußring 4 oder Gehäuserohr 14. Die Distanzleiste 29 dient zur Distanzierung des Rotors vom Stator beim Zusammenbau oder Zerlegen der Maschine. Zu diesem Zweck werden die über den Umfang angeordneten Distanzleisten 29 mit Hilfe beispielsweise der Schrauben 30 über die Permanentmagnete 3 hinausgeschoben. Nach dem Ineinanderschieben von Rotor und Stator und dem Anbringen der Lagerdeckel der Maschine werden die Distanzleisten 29 durch Verdrehen der Schrauben 30 hinter die Permanentmagnete 3 zurückgezogen, sodaß ein freier Lauf der Maschine möglich wird. Die Distanzleisten 29 müssen nach dem Zusammenbau in der Maschine verbleiben, da sie nach der Montage der Lagerdeckel nicht mehr entfernt werden können.

Fig. 11 zeigt eine bevorzugte Ausbildung des Rückschlußringes 4 und der Permanentmagnete 3. Um ein leichteres Positionieren der Permanentmagnete 3 um den Umfang des Rückschlußringes 4 zu erreichen, sind entsprechend der Größe und des Abstandes der Permanentmagnete 3 Leisten 31 an den Rückschlußringen 4 angeordnet. Diese können sehr klein ausgebildet sein und nur zum leichteren Positionieren der Permanentmagnete 3 beim Verkleben mit dem Rückschlußring 4 dienen. Wenn die Leisten 31 größer ausgeführt und speziell geformt, z.B. trapezförmig gestaltet sind, können entsprechend komplementär geformte Permanentmagnete 3 auch ohne Verklebung fest mit den Rückschlußringen 4 verbunden werden. Gemäß einer nicht dargestellten Variante können auch entsprechend geformte Permanentmagnete 3 um den Umfang angeordnet werden und durch einen Teil in Art eines Schlußsteines bei einem Gewölbe ein Halt erzielt werden.

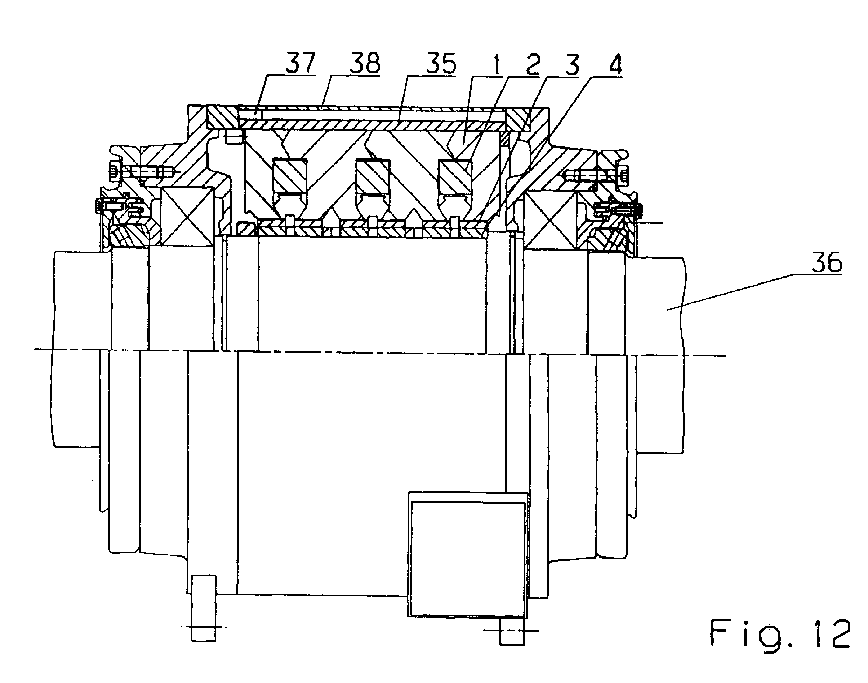

Natürlich sind die Erfindungsmerkmale auch an eine als Innenläufer ausgebildete Transversalflußmaschine anwendbar. Es gelten die Vorteile der erfindungsgemäßen Konstruktion sowohl für die Verwendung der Maschine als Motor sowie als Generator. Fig. 12 zeigt eine Anwendung einer dreiphasigen Transversalflußmaschine in Form eines Innenläufers in seitlicher Schnittbilddarstellung. An einer Rotorachse 36 sind die Rückschlußringe 4 und die daran befestigten Permanentmagnete 3 angeordnet. Der Stator wird durch ein Gehäuserohr 35 mit einer U-Trägernabe gebildet an dem die U-Joche 1 mit den Ringwicklungen 2 und dazwischen die I-Joche (nicht sichtbar) angeordnet sind. An der Oberfläche des Gehäuserohrs 35 kann ein Kühlkanal 37 angeordnet und durch ein Kühlmantelrohr 38 abgedeckt sein. Im Gegensatz zu einer Außenläufermaschine gleicher Baugröße liegt beim Innenläufer der drehmomentbildende Luftspalt radial weiter innen, resultierend in einem geringeren Drehmoment und in einer geringeren Leistung der Maschine.

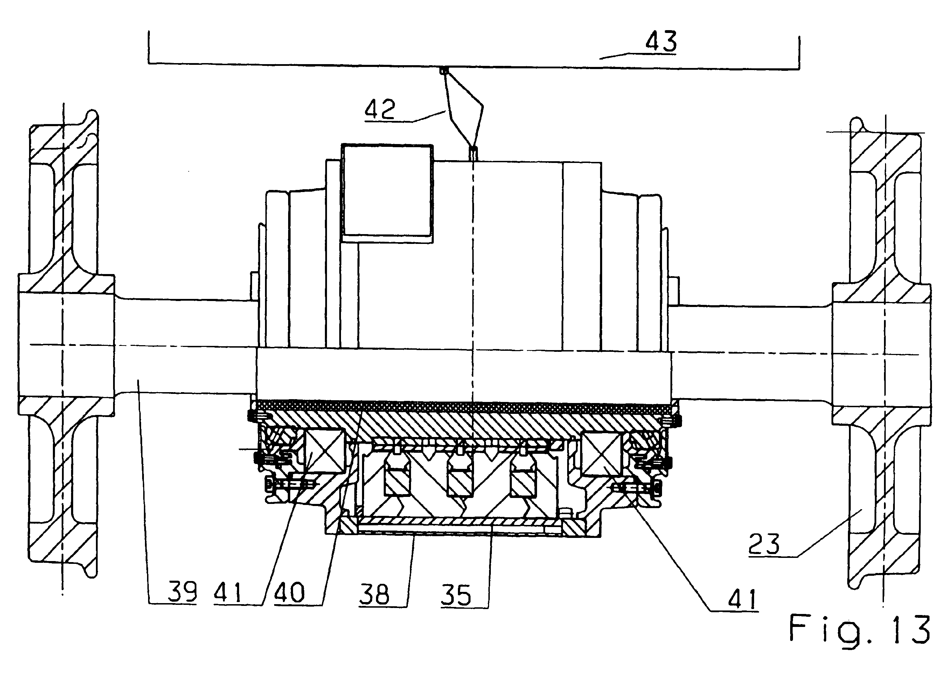

In Fig. 13 ist eine als Innenläufer ausgeführte Transversalflußmaschine als Antrieb der Radachse 39 eines Schienenfahrzeuges dargestellt. Die Rotorachse 36 der als Innenläufer ausgebildeten Transversalflußmaschine ist dabei gleichzeitig die Radachse 39 des Fahrzeuges. Über der Radachse 39 sind elastische Elemente 40 zur Reduktion der unabgefederten Massen angeordnet. Die elastischen Elemente 40 können einstückig oder mehrteilig sein und beispielsweise als rohrförmiges Element, das auf die Radachse 39 aufgesteckt oder aufgeschrumpft wird, vorliegen. Um die Radachse 39 sind die Rückschlußringe 4 mit den Permanentmagneten 3 der Transversalflußmaschine angeordnet. Der Stator der Maschine ist über Lager 41 drehbar an der Radachse 39 gelagert. Das den Stator bildende Gehäuserohr 35 bzw. das Kühlmantelrohr 38 ist über eine Drehmomentenstütze 42 mit dem Fahrzeugaufbau 43 verbunden. Die Drehmomentenstütze 42 fängt das Gegendrehmoment der Transversalflußmaschine ab, läßt aber Relativbewegungen zwischen Antrieb und Fahrzeugaufbau in Fahrtrichtung sowie in senkrechter Richtung zu. Dadurch resultieren relativ geringe unabgefederte Massen, welche bei Schienenfahrzeugen insbesondere für sehr hohe Geschwindigkeiten notwendig sind.

## Patentansprüche

1. Transversalflußmaschine, insbesondere einseitige Transversalflußmaschine mit mindestens einem Stator und einem Rotor, mit über den Umfang des Rotors der Maschine auf weichmagnetischen und allenfalls voneinander magnetisch isolierten Rückschlußringen angeordneten Permanentmagneten, und mit über den Umfang des Stators der Maschine angeordneten weichmagnetischen Bestandteilen in Form von U-Jochen und zwischen den U-Jochen eingesetzten I-Jochen, wobei die U-Joche zumindest eine Ringwicklung aufnehmen, **dadurch gekennzeichnet, daß** die U-Joche (1) geteilt sind, wobei die oder jede Teilungsebene mit der U-Joch-Ebene einen spitzen bis rechten Winkel einschließt, und daß die Einzelteile der U-Joche (I) an ihren Berührungsflächen komplementäre formschlüssige Ausbildungen (24) zur Verhinderung einer radialen Verschiebung der Einzelteile der U-Joche (1) zueinander aufweisen.

2. Transversalflußmaschine nach Anspruch 1, **dadurch gekennzeichnet, daß** die formschlüssigen Ausbildungen (24) der Einzelteile der U-Joche (1) derart ausgebildet sind, daß eine axiale Verschiebung der Einzelteile der U-Joche (1) zueinander verhinderbar ist.

3. Transversalflußmaschine nach Anspruch 1 oder 2, **dadurch gekennzeichnet, daß** die I-Joche (5) in einem magnetisch und elektrisch isolierenden Formkörper (10) eingebettet sind.

4. Transversalflußmaschine nach einem der Ansprüche 1 bis 3, **dadurch gekennzeichnet, daß** radiale Distanzhalter, beispielsweise Schrauben od. dgl. zur Lagefixierung des Stators gegenüber dem Rotor vorgesehen sind.

5. Transversalflußmaschine nach einem der Ansprüche 1 bis 3, **dadurch gekennzeichnet, daß** auf dem Rotor oder Stator Distanzleisten (29), parallel zur Rotationsachse (A) der Maschine angeordnet sind, welche mit Hilfe von Schrauben (30) od. dgl. über den Luftspalt zwischen Rotor und Stator distanzierbar, und während des Betriebs der Maschine unter Freigabe des Luftspalts mit Hilfe der Schrauben (30) od. dgl. zurückziehbar sind.

6. Transversalflußmaschine nach einem der Ansprüche 1 bis 5, **dadurch gekennzeichnet, daß** die Rückschlußringe (4) der Maschine an der, den Permanentmagneten (3) gegenüberliegenden Seite zumindest eine Nut (28) od. dgl. zur Sicherung vor Verdrehung aufweist, welche vorzugsweise quer zur Umfangsrichtung angeordnet ist.

7. Transversalflußmaschine nach Anspruch 6, **dadurch gekennzeichnet, daß** die Rückschlußringe (4) zumindest m Nuten (28) od. dgl. mit einem Abstand (a) von (2τₚ)/m voneinander in Umfangrichtung aufeinanderfolgend aufweisen, wobei m die Anzahl der Phasen und τₚ die Polteilung der Maschine bedeuten.

8. Transversalflußmaschine nach einem der Ansprüche 1 bis 7, **dadurch gekennzeichnet, daß** die Rückschlußringe (4) durch axial außenliegende Preßringe (8) in axialer Richtung fixierbar sind.

9. Transversalflußmaschine nach einem der Ansprüche 1 bis 8, **dadurch gekennzeichnet, daß** allfällige Hohlräume (12) zwischen den U-Jochen (1), den I-Jochen (5), den allfälligen Formkörpern (10) und den Ringwicklungen (2) mit elektrisch isolierendem Material ausgefüllt sind.

10. Transversalflußmaschine nach einem der Ansprüche 1 bis 9, **dadurch gekennzeichnet, daß** zur Aufnahme der U-Joche (1) am Stator eine aus einzelnen Platten aufgebaute U-Trägemabe (7) vorgesehen ist, welche Platten in Richtung zur Rotationsachse (A) senkrecht orientierten Ebenen ausgerichtet sind.

11. Transversalflußmaschine nach einem der Ansprüche 1 bis 10, **dadurch gekennzeichnet, daß** an den Rückschlußringen (4) Ausformungen, beispielsweise Leisten (31) od. dgl. entsprechend der Position der Permanentmagnete (3) vorgesehen sind.

12. Transversalflußmaschine nach Anspruch 11, **dadurch gekennzeichnet, daß** die Leisten (31) od. dgl. an den Rückschlußringen (4) und die Permanentmagnete (3) komplementäre Gestalt aufweisen.

13. Transversalflußmaschine nach einem der Ansprüche 1 bis 12, **dadurch gekennzeichnet, daß** bei der Ausbildung der Maschine als Außenläufer an einer feststehenden Statorachse (6) eine U-Trägernabe (7) zur Aufnahme der U-Joche (1) angeordnet ist, und der Rotor durch ein Gehäuserohr (14) gebildet ist, in dem innenseitig die Rückschlußringe (4) mit den Permanentmagneten (3) angeordnet sind.

14. Transversalflußmaschine nach Anspruch 13, **dadurch gekennzeichnet, daß** die U-Joche (1), die I-Joche (5) und allenfalls die, die I-Joche (5) enthaltenden Formkörper (10) Nuten (25, 26, 27) od. dgl. zur Aufnahme von Bandagen gegen eine radiale Verschiebung aufweisen.

15. Transversalflußmaschine nach Anspruch 14, **dadurch gekennzeichnet, daß** die Formkörper (10) Doppelnuten (27) mit zwei unterschiedlichen, abgestuften Nuttiefen aufweisen.

16. Transversalflußmaschine nach einem der Ansprüche 13 bis 15, **dadurch gekennzeichnet, daß** an der Oberfläche der Statorachse (6) mindestens ein mäanderförmig, schraubenförmig od. dgl. angeordneter Kühlkanal (22) zur Führung eines vorzugsweise flüssigen Kühlmediums angeordnet und durch ein zylinderförmiges Kühlmantelrohr (32) nach außen abgedichtet ist.

17. Transversalflußmaschine nach einem der Ansprüche 1 bis 12, **dadurch gekennzeichnet, daß** bei Ausbildung der Maschine als Innenläufer um eine Rotorachse (36) mit den Rückschlußringen (4) mit den Permanentmagneten (3) ein, den Stator bildenes Gehäuserohr (35) vorgesehen ist, an dem innenseitig die U-Joche (1) und I-Joche (5) angeordnet sind.

18. Transversalflußmaschine nach Anspruch 17, **dadurch gekennzeichnet, daß** die Permanentmagnete (3) oder die Rückschlußringe (4) Nuten od. dgl. zur Aufnahme von Bandagen gegen eine radiale Verschiebung aufweisen.

19. Transversalflußmaschine nach Anspruch 17 oder 18, **dadurch gekennzeichnet, daß** an der Oberfläche des Gehäuserohrs (35) mindestens ein mäanderförmig, schraubenförmig od. dgl. angeordneter Kühlkanal (37) zur Führung eines vorzugsweise flüssigen Kühlmediums angeordnet und durch ein zylinderförmiges Kühlmantelrohr (38) nach außen abgedichtet ist.

20. Transversalflußmaschine nach einem der Ansprüche 17 bis 19, **dadurch gekennzeichnet, daß** die, die Permanentmagnete (3) tragenden Rückschlußringe (4) mit der anzutreibenden Radachse (39) des Fahrzeuges drehfest über elastische Elemente (40) od. dgl. verbunden sind, und daß das Gehäuserohr (35) über Lager (41) auf der Radachse (39) gelagert ist und das Gehäuserohr (35) über eine Drehmomentenstütze (42) mit dem Fahrzeugaufbau (43) verbunden ist.

21. Transversalflußmaschine nach Anspruch 20, **dadurch gekennzeichnet, daß** die Drehmomentenstütze (42) durch mindestens zwei, vorzugsweise vier gelenkig miteinander verbundene, in Form eines Parallelogramms angeordnete Lenker gebildet ist, wobei ein Eckpunkt mit dem Gehäuserohr (35) der Transversalflußmaschine und ein Eckpunkt mit dem Fahrzeugaufbau (43) verbunden ist.

## Claims

1. A transversal flux machine, in particular a single-sided transversal flux machine having at least one stator and a rotor, with permanent magnets being arranged along the circumference of the rotor of the machine on return-path rings which are soft-magnetic and possibly magnetically isolated from each other, and with soft-magnetic components arranged along the circumference of the stator of the machine and present in the form of U-yokes, and with I-yokes inserted between the U-yokes, wherein the U-yokes receive at least one ring winding, **characterised in that** the U-yokes (1) are divided, wherein the or each plane of division together with the U-yoke plane encloses an acute to right angle, and **in that** the component parts of the U-yokes (1) have complementary positive-locking formations (24) provided on their contact surfaces for preventing radial shift of the component parts of the U-yokes (1) relative to each other.

2. The transversal flux machine according to claim 1, **characterised in that** the positive-locking formations (24) of the component parts of the U-yokes (1) are designed such that an axial shift of the component parts of the U-yokes (1) relative to each other is preventable.

3. The transversal flux machine according to claim 1 or 2, **characterised in that** the I-yokes (5) are embedded in a magnetically and electrically isolating shaped body (10).

4. The transversal flux machine according to any one of claims 1 to 3, **characterised in that** radial spacers, e.g. screws or the like, are provided for fixing the position of the stator relative to the rotor.

5. The transversal flux machine according to any one of claims 1 to 3, **characterised in that** spacing ridges (29) are arranged on the rotor or stator in parallel to the axis of rotation (A) of the machine, which spacing ridges are spaceable along the air gap between the rotor and the stator by means of screws (30) or the like and which are retractable during operation of the machine by clearing the air gap by the aid of the screws (30) or the like.

6. The transversal flux machine according to any one of claims 1 to 5, **characterised in that** the return-path rings (4) of the machine have at least one groove (28) or the like on the side facing the permanent magnets (3) for ensuring prevention of twisting, said groove being preferably arranged transversely to the circumferential direction.

7. The transversal flux machine according to claim 6, **characterised in that** the return-path rings (4) have at least m grooves (28) or the like with a distance (a) of (2τₚ)/m from each other in successive order in circumferential direction, wherein m represents the number of phases and τₚ the pole division of the machine.

8. The transversal flux machine according to any one of claims 1 to 7, **characterised in that** the return-path rings (4) are fixable in axial direction by means of press rings (8) axially lying outside.

9. The transversal flux machine according to any one of claims 1 to 8, **characterised in that** possible cavities (12) between the U-yokes (1), the I-yokes (5), the possible shaped bodies (10) and the ring windings (2) are filled with electrically isolating material.

10. The transversal flux machine according to any one of claims 1 to 9, **characterised in that** a U-carrier element (7) assembled of individual plates is provided for receiving the U-yokes (1) on the stator, which plates are oriented towards planes that are vertically oriented in the direction towards the axis of rotation (A).

11. The transversal flux machine according to any one of claims 1 to 10, **characterised in that** formations, e.g. ridges (31) or the like, are provided on the return-path rings (4) according to the position of the permanent magnets (3).

12. The transversal flux machine according to claim 11, **characterised in that** the ridges (31) or the like provided on the return-path rings (4) are designed to be complementary with the permanent magnets (3).

13. The transversal flux machine according to any one of claims 1 to 12, **characterised in that** in the machine designed as external rotor on a stationary stator axis (6), a U-carrier element (7) is provided for receiving the U-yokes (1), and the rotor is formed by a housing tube (14) in which, on its inner side, the return-path rings (4) with the permanent magnets (3) are arranged.

14. The transversal flux machine according to claim 13, **characterised in that** the U-yokes (1), the I-yokes (5), and possibly the mould bodies (10) containing the I-yokes (5), have grooves (25, 26, 27) or the like for receiving bandages against radial displacement.

15. The transversal flux machine according to claim 14, **characterised in that** the shaped bodies (10) have double grooves (27) with two different graduated groove depths.

16. The transversal flux machine according to any one of claims 13 to 15, **characterised in that** at least one cooling channel (22) arranged in meander-shaped, screw-shaped or the like manner is provided on the surface of the stator axis (6) for guiding a preferably liquid cooling medium and is sealed in outward direction by a cylindrical cooling jacket pipe (32).

17. The transversal flux machine according to any one of claims 1 to 12, **characterised in that** in the machine designed as internal rotor around a rotor axis (36) with the return-path rings (4) with the permanent magnets (3), a housing tube (35) is provided which forms the stator and on which inner side the U-yokes (1) and the I-yokes (5) are arranged.

18. The transversal flux machine according to claim 17, **characterised in that** the permanent magnets (3) or the return-path rings (4) have grooves or the like for receiving bandages against radial displacement.

19. The transversal flux machine according to claim 17 or 18, **characterised in that** on the surface of the housing tube (35) at least one cooling channel (37) arranged in meander-shaped, screw-shaped or the like manner is provided for guiding a preferably liquid cooling medium, and is sealed in outward direction by a cylindrical cooling jacket tube (38).

20. The transversal flux machine according to any one of claims 17 to 19, **characterised in that** the return-path rings (4) carrying the permanent magnets (3) are connected with the wheel axle (39), which is to be driven, of the vehicle in a torque-proof manner via elastic elements (40) or the like, and **in that** the housing tube (35) is carried on the wheel axle (39) via bearings (41) and that the housing tube (35) is connected with the vehicle structure (43) via a torque support (42).

21. The transversal flux machine according to claim 20, **characterised in that** the torque support (42) is formed by at least two, preferably four steering members which are hingedly connected with each other and arranged in the form of a parallelogram, wherein one corner point is connected with the housing tube (35) of the transversal flux machine and one corner point with the vehicle structure (43).

## Revendications

1. Machine à flux transversal, notamment machine à flux transversal unilatérale avec au moins un stator et un rotor, avec des aimants permanents disposés sur la circonférence du rotor de la machine sur des anneaux de dérivation magnétiques doux et isolés dans tous les cas les uns des autres magnétiquement, et avec des composants magnétiques doux disposés sur la circonférence du stator de la machine sous forme de culasses en forme de U, , et des culasses en forme de I installés entre les culasses en forme de U, les culasses en forme de U recevant au moins un enroulement d'anneau, **caractérisée en ce que** les culasses en forme de U (1) sont séparés, le ou chaque plan de séparation renfermant avec le plan de culasse en forme de U un angle aigu à droit, et **en ce que** les pièces détachées des culasses en forme de U (1) comprennent, au niveau de leurs surfaces de contact, des configurations (24) complémentaire par liaison de forme permettant d'éviter un déplacement radial des pièces détachées des culasses en forme de U (1) les unes par rapport aux autres.

2. Machine à flux transversal selon la revendication 1, **caractérisée en ce que** les configurations (24) par liaison de forme des pièces détachées des culasses en forme de U (1) sont réalisées de manière à ce qu'un déplacement axial des pièces détachées des culasses en forme de U (1) les unes par rapport aux autres puisse être évité.

3. Machine à flux transversal selon la revendication 1 ou 2, **caractérisée en ce que** les culasses en forme de I (5) sont intégrés dans un corps moulé (10) isolé magnétiquement et électriquement.

4. Machine à flux transversal selon l'une quelconque des revendications 1 à 3, **caractérisée en ce que** des pièces d'écartement radiales, par exemple des vis ou similaire, sont prévues pour la fixation en position du stator par rapport au rotor.

5. Machine à flux transversal selon l'une quelconque des revendications 1 à 3, **caractérisée en ce que**, sur le rotor ou le stator, des barres d'espacement (29) sont disposées parallèlement à l'axe de rotation (A) de la machine, lesquelles, à l'aide de vis (30) ou similaire, peuvent être espacées au travers de l'entrefer entre le rotor et le stator et peuvent être retirées par libération de l'entrefer à l'aide des vis (30) ou similaire pendant le fonctionnement de la machine.

6. Machine à flux transversal selon l'une quelconque des revendications 1 à 5, **caractérisée en ce que** les anneaux de dérivation (4) de la machine comprennent, du côté faisant face aux aimants permanents (3), au moins une rainure (28) ou similaire servant de protection contre une torsion, laquelle est de préférence disposée de manière transversale par rapport à la direction circonférentielle.

7. Machine à flux transversal selon la revendication 6, **caractérisée en ce que** les anneaux de dérivation (4) comprennent de manière successive dans la direction circonférentielle au moins m rainures (28) ou similaire avec une distance (a) de (2τₚ)/m de l'une à l'autre, m signifiant le nombre des phases et τₚ signifiant le pas polaire de la machine.

8. Machine à flux transversal selon l'une quelconque des revendications 1 à 7, **caractérisée en ce que** les anneaux de dérivation (4) peuvent être fixés dans la direction axiale au moyen d'anneaux de serrage (8) se trouvant axialement à l'extérieur.

9. Machine à flux transversal selon l'une quelconque des revendications 1 à 8, **caractérisée en ce que** d'éventuels espaces creux (12) entre les culasses en forme de U (1), les culasses en forme de I (5), les éventuels corps moulés (10) et les enroulements d'anneau (2) sont remplis d'un matériau électriquement isolant.

10. Machine à flux transversal selon l'une quelconque des revendications 1 à 9, **caractérisée en ce que**, pour recevoir les culasses en forme de U (1) au niveau du stator, est prévu un pivot de support en forme de U (7) constitué de plaques individuelles, lesquelles plaques sont alignées dans la direction de plans orientés perpendiculairement à l'axe de rotation (A).

11. Machine à flux transversal selon l'une quelconque des revendications 1 à 10, **caractérisée en ce que**, au niveau des anneaux de dérivation (4), sont prévus des façonnages, par exemple des barres (31) ou similaire, conformément à la position des aimants permanents (3).

12. Machine à flux transversal selon la revendication 11, **caractérisée en ce que** les barres (31) ou similaire au niveau des anneaux de dérivation (4) et les aimants permanents (3) présentent une configuration complémentaire.

13. Machine à flux transversal selon l'une quelconque des revendications 1 à 12, **caractérisée en ce que**, dans le cas de la réalisation de la machine en tant que rotor extérieur, au niveau d'un axe de stator (6) fixe, est disposé un pivot de support en forme de U (7) permettant de recevoir les culasses en forme de U (1) et le rotor est formé par un tube de logement (14) dans lequel, du côté intérieur, les anneaux de dérivation (4) sont disposés avec les aimants permanents (3).

14. Machine à flux transversal selon la revendication 13, **caractérisée en ce que** les culasses en forme de U (1), les culasses en forme de I (5) et éventuellement les corps moulés (10) comportant les culasses en forme de I (5) comprennent des rainures (25, 26, 27) ou similaire permettant de recevoir des frettes contre un déplacement radial.

15. Machine à flux transversal selon la revendication 14, **caractérisée en ce que** les corps moulés (10) comprennent des doubles rainures (27) avec deux profondeurs de rainure graduées différentes.

16. Machine à flux transversal selon l'une quelconque des revendications 13 à 15, **caractérisée en ce qu'**au moins un canal de refroidissement (22) agencé de manière sinueuse, filetée ou similaire et permettant de guider un produit de refroidissement de préférence liquide est disposé au niveau de la surface de l'axe de stator (6) et est fermé de manière étanche par un tube de refroidissement externe cylindrique (32) vers l'extérieur.

17. Machine à flux transversal selon l'une quelconque des revendications 1 à 12, **caractérisée en ce que**, dans le cas de la réalisation de la machine en tant que rotor intérieur autour d'un axe de rotor (36) avec les anneaux de dérivation (4) avec les aimants permanents (3), est prévu un tube de logement (35) formant le stator, au niveau duquel, du côté intérieur, les culasses en forme de U (1) et les culasses en forme de I (5) sont disposés.

18. Machine à flux transversal selon la revendication 17, **caractérisée en ce que** les aimants permanents (3) ou les anneaux de dérivation (4) comprennent des rainures ou similaire permettant de recevoir des frettes contre un déplacement radial.

19. Machine à flux transversal selon la revendication 17 ou 18, **caractérisée en ce qu'**au moins un canal de refroidissement (37) agencé de manière sinueuse, filetée ou similaire et permettant de guider un produit de refroidissement de préférence liquide est disposé au niveau de la surface du tube de logement (35) et est fermé de manière étanche par un tube de refroidissement externe cylindrique (38) vers l'extérieur.

20. Machine à flux transversal selon l'une quelconque des revendications 17 à 19, **caractérisée en ce que** les anneaux de dérivation (4) portant les aimants permanents (3) sont reliés à l'essieu (39) à commander du véhicule de manière fixe par l'intermédiaire d'éléments élastiques (40) ou similaire, et **en ce que** le tube de logement (35) est calé sur l'essieu (39) par le biais de coussinets (41) et le tube de logement (35) est relié à la structure du véhicule (43) par l'intermédiaire d'une biellette anticouple (42).

21. Machine à flux transversal selon la revendication 20, **caractérisée en ce que** la biellette anticouple (42) est formée par au moins deux, de préférence quatre, bielles agencées sous la forme d'un parallélogramme et reliées les unes aux autres de manière souple, un point d'angle étant relié au tube de logement (35) de la machine à flux transversal et un point d'angle étant relié à la structure du véhicule (43).
